# EUROPEAN PATENT APPLICATION

(11) **EP 4 722 795 A1**
(43) Date of publication of application: **08.04.2026**
(21) Application number: 23943652.0
(22) Date of filing: 28.06.2023
(51) Int. Cl.: G02F 1/01, G02B 6/42

(54) **OPTICAL MODULE AND METHOD FOR MANUFACTURING SAME**

(71) Applicant: NTT, Inc., Tokyo 100-8116 (JP)
(72) Inventor: OZAKI Josuke, Musashino-shi, Tokyo 180-8585 (JP); OGISO Yoshihiro, Musashino-shi, Tokyo 180-8585 (JP); NUNOYA Nobuhiro, Musashino-shi, Tokyo 180-8585 (JP)
(74) Representative: Samson & Partner Patentanwälte mbB
(86) International application number: PCT/JP2023/024086
(87) International publication number: WO 2025/004256

(57) **Abstract**

Provided are an optical module capable of suppressing oscillation of a high-frequency characteristic and stably operating, and a method for manufacturing the optical module. The optical module according to the present disclosure includes: one of a driver IC chip and a modulator chip, or a TIA chip and a receiver chip, integrated in the same package having an RF terrace connected with an RF interface; a plurality of wires that connect the driver IC chip with the modulator chip, or the TIA chip with the receiver chip, and the driver IC chip with the RF terrace, or the TIA chip with the RF terrace, and are installed for each connection portion; and a lid serving as a cap portion disposed at a position facing the driver IC chip and the modulator chip, or the TIA chip and the receiver chip, and a distance in a vertical direction from a surface of the driver IC chip or a surface of the TIA chip to a surface of the lid is less than 1/2 times a wavelength corresponding to an atmosphere in the package at a frequency of 0.7 times an operation baud rate.

## Description

### Technical Field

The present disclosure relates to an optical module and a method for manufacturing the same.

### Background Art

In order to cope with increasing communication traffic demand, high-speed optical modulators and optical receiver compatible with advanced optical modulation systems are required. In optical modulators and optical receivers in early 100G digital coherent communication systems, each of components is packaged and mounted on a printed circuit board (PCB). For example, in the case of an optical modulator, a driver IC and an optical modulator chip are individually packaged, and the packaged IC and chip are mounted on a PCB. In the case of an optical receiver, a transimpedance amplifier (TIA) and an optical receiver chip are individually packaged and mounted as separate components on a PCB.

In a digital coherent communication system exceeding 400G in which the speed is further increased, an optical modulator and an optical receiver are also required to have a broadband so as to be able to handle a signal of 40 GHz or more, and it is necessary to reduce a high-frequency loss and reduce a size. In the case of an optical modulator, a driver IC and an optical modulator chip are integrally mounted in one package as an optical module. Also in the case of an optical receiver, a TIA and an optical receiver chip are integrally mounted as a single optical module. Also for a signal format for inputting and outputting a baseband signal, design from a single-ended format to a differential format has been generalized as one of means for realizing increase in speed, reduction in size, and low power consumption. At present, device development for achieving 800 Gbps and 1 Tbps (128 GBd operation) is in progress.

The Optical Internetworking Forum (OIF) has set a standard with the name of a High-Bandwidth Coherent Driver Modulator (HB-CDM) as an optical transmitter in which a driver IC and an optical modulator are mounted in an integrated package. In Non Patent Literature 1, physical configurations, interface specifications, and the like are defined as various types of modules. Also on the reception side, a TIA and an optical receiver are mounted in an integrated package, which is also called a High-Bandwidth Intradyne Coherent Receiver (HB-ICR).

As described above, in the demand for a broader band digital coherent communication system, there is a problem that a driver IC, a TIA, and the like are integrated in the same package as the optical device, so that the mounting state becomes extremely complicated, and the difficulty level of always realizing stable operation in the entire band in the operation frequency band is extremely higher than a case where the driver IC, the TIA, and the like are individually packaged. Specifically, depending on the mounting state, an event such as occurrence of oscillation within a necessary frequency band may occur, thereby causing characteristic deterioration of the optical module (the optical modulator module and the optical receiver module).

### Citation List

### Non Patent Literature

Non Patent Literature 1: OIF, Implementation Agreement for the High Bandwidth Coherent Driver Modulator (HB-CDM), [online], July 15, 2021, [Searched on January 20, 2023], Internet <URL: https://www.oiforum.com/wp-content/uploads/OIF-HB-CDM-02.0.pdf>
Non Patent Literature 2: A.L.M.T. Corp., "Hito Shinku Zairyo No Tokusei Ichiran Hyou" (in Japanese) (Heatspreader Materials Characteristic Table), [online] June 4, 2018, Internet <URL: https://www.allied-material.co.jp/dcms_media/other/t52nn.pdf>
Non Patent Literature 3: J. Ozaki et al., "Over-85-GHz-bandwidth InP-based Coherent Driver Modulator Capable of 1-Tb/s/λ-class Operation", IEEE/OSA Journal of Lightwave Technology, vol.41, issue 11, pp3290-3296 (2023)

### Summary of Invention

The present disclosure has been made in view of the above problems, and an object thereof is to propose an optical module in which a driver IC and an optical modulator chip, or a TIA and an optical receiver chip are mounted adjacent to each other in the same package, the optical module being capable of suppressing oscillation of a high-frequency characteristic and stably operating, and a method for manufacturing the optical module.

In order to solve the problems described above, the present disclosure provides an optical module including: one of a driver IC chip and a modulator chip, or a TIA chip and a receiver chip, integrated in the same package having an RF terrace connected with an RF interface; a plurality of wires that connect the driver IC chip with the modulator chip, or the TIA chip with the receiver chip, and the driver IC chip with the RF terrace, or the TIA chip with the RF terrace, and are installed for each connection portion; and a lid serving as a cap portion disposed at a position facing the driver IC chip and the modulator chip, or the TIA chip and the receiver chip, and a distance in a vertical direction from a surface of the driver IC chip or a surface of the TIA chip to a surface of the lid is less than 1/2 times a wavelength corresponding to an atmosphere in the package at a frequency of 0.7 times an operation baud rate.

### Brief Description of Drawings

Fig. 1 is a side cross-sectional view schematically illustrating a structure of an optical module 100 according to the present disclosure.
Fig. 2 is a diagram schematically illustrating a structure of an optical module 200 according to the present disclosure.
Fig. 3 is a side cross-sectional view schematically illustrating a configuration of an optical module 300 according to the present disclosure, in which (a) illustrates a side cross-sectional view, and (b) illustrates a view of a driver IC chip 101 installed on a metal block 106 as viewed from an upper surface.
Fig. 4 is a side cross-sectional view schematically illustrating a structure of an optical module 400 according to the present disclosure.
Fig. 5 illustrates a result obtained by experimentally producing an HB-CDM capable of 160 GBd class operation on which the driver IC chip 101 and the modulator chip 102 are mounted, and changing the thickness of the lid 110 to adjust the distance between the surface of the driver IC chip 101 and the surface of the lid 110 to be less than 1/2 times the wavelength at the maximum frequency so as to confirm the oscillation suppression effect.

### Description of Embodiments

Various embodiments of the present disclosure will be described in detail below with reference to the drawings. The same or similar reference signs denote the same or similar components, and redundant description may be omitted. The numerical values are for purposes of illustration and are not intended to limit the scope of the present disclosure. Moreover, the following description is an example, and some configurations may be omitted, modified, or implemented together with additional configurations without departing from the gist of an embodiment of the present disclosure.

Also, in the context of the following description, an optical module according to the present disclosure is described as being an HB-CDM in which a driver IC chip and a modulator chip are mounted in one package. However, this is for illustrative purposes and the optical module according to the present disclosure may be an optical module (for example, an optical receiver module (e.g., HB-ICR) in which a driver IC chip is replaced with a TIA and a modulator chip is replaced with a receiver chip, an optical transceiver module (e.g., IC-TROSA), or the like) having the same or similar configuration.

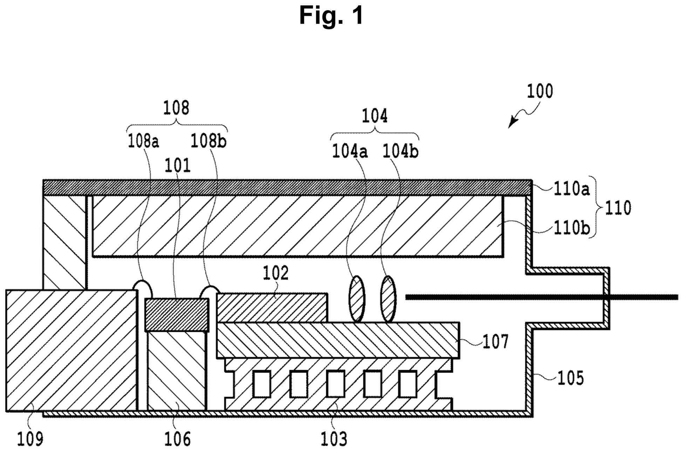

Fig. 1 is a side cross-sectional view schematically illustrating a structure of an optical module 100 according to the present disclosure. As illustrated in Fig. 1, the optical module 100 has a form in which a driver IC chip 101, a modulator chip 102, a Peltier element 103, and an optical mounting member 104 are mounted in a package 105. Moreover, the optical module 100 further includes an RF terrace 109 connected with an interface (e.g., a flexible printed circuit board or the like) of a high-frequency (which will be hereinafter referred to as RF) signal, and a lid 110 to be a cap portion of the optical module 100 formed at a position facing the upper surfaces of the driver IC chip 101 and the modulator chip 102. The driver IC and the modulator chip 102, and the driver IC and the RF terrace 109 are connected by a wire 108. Note that the inside of the package 105 is hermetically sealed. Moreover, although the lid 110 in Fig. 1 is depicted as a form divided into a thin plate portion 110a disposed on the outer side and a thick plate portion 110b disposed on the inner side, this is intended to be an illustration, and may have a structure in which the thin plate portion 110a and the thick plate portion 110b are integrally molded. Furthermore, the thick plate portion 110b may be a single layer (single structure) as illustrated in Fig. 1, or may include a plurality of layers (a structure including an additional metal block to be used for thickness adjustment).

As illustrated in Fig. 1, the driver IC chip 101 may be mounted on a metal block 106, or may be mounted on the package 105 formed of a ceramic material (dielectric material). However, in order for the driver IC chip 101 to stably operate, it is important to stabilize the ground surface of the driver IC chip 101, and therefore it is desirable that the driver IC chip 101 is mounted on the metal block 106 from the viewpoint of stabilizing the ground potential. In addition, since the driver IC chip 101 generates a large amount of heat, it is desirable that the driver IC chip is mounted on the metal block 106 from the viewpoint of dissipating heat. The material of the metal block 106 may be, for example, CuW. Moreover, the metal block 106 is mounted in the package 105 by soldering, and the driver IC chip 101 is mounted on the metal block 106 using conductive paste, low-temperature solder, or the like. These bonding aides suppress a thermal load on the driver IC chip 101 and have excellent thermal conductivities, and thus are suitable as aids for mounting.

Since InP is used for the modulator chip 102, temperature control is required. Therefore, the modulator chip 102 is mounted on the Peltier element 103 so that temperature management becomes possible. Moreover, in the optical module 100, a substrate 107 may be installed between the Peltier element 103 and the modulator chip 102 as illustrated in Fig. 1. AlN may be used for the substrate 107 so that DC wiring of the modulator chip 102 is wired. Moreover, the substrate 107 may further include an alignment mark for mounting the optical mounting member 104. On the other hand, the optical module 100 may not include the substrate 107, and in such a case, a similar function is realized by wiring a similar metal pattern on the upper surface (the surface connected with the modulator chip 102) of the Peltier element 103. Moreover, such a form not including the substrate 107 has few contact points between elements and can reduce the number of members, leading to a reduction in thermal resistance, and thus has an advantage that power consumption of the Peltier element 103 can be reduced.

As described above, AlN is used for the substrate 107. This is because AlN has a linear expansion coefficient equivalent to that of InP used for the modulator chip 102, so that thermal stress due to a difference in thermal expansion coefficient can be suppressed, leading to excellent material matching (e.g., refer to Non Patent Literature 2). Therefore, it is desirable to use AlN for the upper surface of the Peltier element 103 regardless of the presence or absence of the substrate 107. Accordingly, it is desirable that the lower surface of the Peltier element 103 (the surface in contact with the package 105) is also formed of AlN. This is because of deformation (warpage) due to application of temperature at the time when the Peltier element 103 is fixed to the package 105 by soldering. Specifically, during soldering, a high temperature of 200°C or higher is applied to the Peltier element 103. At this time, if the ceramic materials of the upper surface and the lower surface of the Peltier element 103 are different, there is a possibility that the Peltier element 103 is warped and fixed. Then, when another member is formed in such a warped state, the optical loss may increase due to the warpage. Accordingly, it is desirable that both the upper surface and the lower surface of the Peltier element 103 are formed of AlN.

Similarly to the driver IC chip 101 and the metal block 106, the Peltier element 103 and the substrate 107, or the Peltier element 103 and the modulator chip 102 need to be mounted by a material (e.g., solder or conductive paste) having excellent thermal conductivity. This is because the power consumption of the Peltier element 103 increases due to an increase in thermal resistance in the case of fixing with a bonding aid having low thermal conductivity.

The optical mounting member 104 may be, for example, a lens. Although the optical mounting member 104 in Fig. 1 is depicted as being mounted on the substrate 107 as two bodies (the optical mounting members 104a and 104b), not the entire optical mounting member 104 needs to be mounted on the substrate 107. However, it is desirable that the optical mounting member 104 is mounted on the same member as the modulator chip 102 so that the optical mounting member 104 also follows warpage or the like that may occur during various operations. Moreover, in a case where the entire optical mounting member 104 is mounted on the Peltier element 103, the optical mounting member 104 is managed at a constant temperature, so that fluctuation or the like of the optical mounting member 104 with temperature dependency as a starting point is suppressed, and an effect that the optical characteristic can be stabilized regardless of the temperature is exhibited.

The optical module 100 according to the present disclosure having such a configuration includes additional components for suppressing oscillation in the high-frequency characteristic described above. Hereinafter, the configuration will be described in detail.

### (Distance between driver IC and lid)

Hereinafter, the positional relationship between members when considering the high-frequency characteristic will be described. The distance (corresponding to the distance in the vertical direction from the surface of the driver IC chip 101 to the surface of the thick plate portion 110b on the side facing the driver IC chip 101 in the form illustrated in Fig. 1) in the vertical direction from the surface of the driver IC chip 101 to the surface of the lid 110 needs to be less than 1/2 times the wavelength corresponding to the atmosphere in the package 105 at a frequency of 0.7 times the operation baud rate in order to prevent the oscillation from occurring in a necessary frequency band. The value of 0.7 times the operation baud rate is a value indicating a frequency band generally necessary for operating the baud rate. In particular, since the operation of the driver IC chip 101 tends to be more unstable as the frequency is higher, it is important to consider the state at the maximum frequency as described above.

For example, when assuming 128 GBd operation, the frequency of 0.7 times the operation baud rate is approximately 90 GHz. Assuming that the atmosphere in the package 105 is air, the relative permittivity is approximately 1, so that the wavelength of the signal is approximately 3.33 mm when a signal of 90 GHz is converted into a wavelength. From the above viewpoint, the optical module 100 needs to be configured such that this wavelength does not coincide with a structural cavity resonance frequency. The cavity resonance is generally resonance by obtaining a standing wave at a length at which the length of the space (cavity portion) is an integral multiple of λ/2. If the length is such that the resonance wavelengths coincide with each other, resonance occurs in the space, and oscillation occurs due to the high-frequency characteristic. Therefore, in order to suppress this cavity resonance, it is possible to suppress the occurrence of resonance within the entire frequency band by setting the length of the space (cavity portion) to less than 1/2 times the spatial wavelength. This is because it is possible to reliably set the length of the space (cavity portion) to less than 1/2 times the wavelength at the maximum frequency when the length is less than 1/2 times the wavelength at the maximum frequency. Although it is ideal that all the lengths of all the spaces in the package 105 are set to less than 1/2 times the wavelength at the maximum frequency, it is difficult in practice, and thus it is only required to set the length of a portion most contributing to the occurrence of resonance to 1/2 times the wavelength at the maximum frequency. The most contributing portion is at the distance in the vertical direction from the surface of the driver IC chip 101 to the surface of the lid 110. From the viewpoint of the function that the driver IC chip 101 has a factor of unstable operation and amplifies a high-frequency signal, it is most important that the driver IC chip 101 portion that most affects the characteristic satisfies this condition. Accordingly, since the electromagnetic field distribution is also radiated toward the upper surface from the driver IC chip 101, the distance in the vertical direction from the surface of the driver IC chip 101 to the lid 110 may be less than 1/2 times the wavelength at the maximum frequency. However, the distance in the vertical direction between the entire surface of the driver IC chip 101 and the surface of the lid 110 installed on the upper portion thereof needs to be less than 1/2 times the wavelength at the maximum frequency.

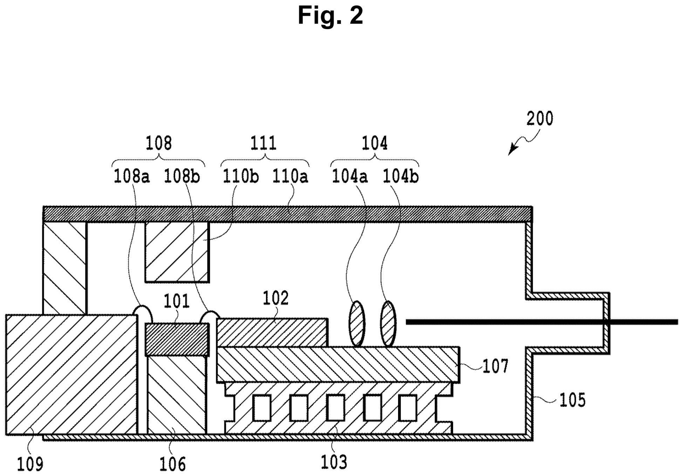

As described above, in the optical module 100 according to the present disclosure, the distance in the vertical direction between the driver IC chip 101 and the lid 110 is set small, so that oscillation of cavity resonance within a necessary frequency band (a state in which the distance in the vertical direction from the driver IC chip 101 to the surface of the lid 110 is an integral multiple of λ/2 in the entire necessary frequency band) is avoided. Although Fig. 1 depicts a configuration in which the thick plate portion 110b of the lid 110 extends not only to the driver IC chip 101 but also to a position facing the modulator chip 102 and the optical mounting member 104, the thick plate portion 110b of the lid 110 may be formed only in a portion corresponding to the driver IC chip 101 which is a space to be particularly noted, as in an optical module 200 illustrated in Fig. 2. For example, in a case where the optical mounting member 104 is disposed at a position higher than the surface of the driver IC chip 101, the thick plate portion 110b of the lid 110 and the optical mounting member 104 may interfere with each other in the optical module 100. In that case, the configuration of the optical module 200 is useful. Moreover, in a case where there is a possibility that the thick plate portion 110b of the lid 110 interferes with another member (e.g., the optical mounting member 104), the interfering portion in the thick plate portion 110b of the lid 110 may be thin.

### (Distance between driver IC and modulator chip, and distance between driver IC and RF terrace)

In order to realize a broadband optical modulator, it is extremely important to make the distance between the RF terrace 109 and the driver IC chip 101 and the distance between the driver IC chip 101 and the modulator chip 102 as small as possible to suppress the inductance of the wire 108 to be connected. Considering the degree of influence on the high-frequency characteristic, it is particularly important to suppress the inductance of the wire 108b that connects the driver IC chip 101 with the modulator chip 102, and it is important to consider the mounting positional relationship of this portion (e.g., refer to Non Patent Literature 3). For example, the distance and height difference between the driver IC chip 101 and the modulator chip 102 need to be 100 µm or less. On the other hand, since the influence on the characteristic between the driver IC chip 101 and the RF terrace 109 is smaller than that between the driver IC chip 101 and the modulator chip 102, both the distance and the height difference between the driver IC chip 101 and the RF terrace 109 are allowable up to 200 µm or less.

### (Form of wire and bonding procedure)

Although it seems that there is only one wire 108a and one wire 108b since Fig. 1 is a side cross-sectional view, a plurality of wires 108a and 108b may be provided from the viewpoint of suppressing the inductance of the wire 108. For example, when two or more wires are connected for each signal line PAD to be connected, the wire inductance can be effectively reduced. Note that the numerical values of the height differences described above are based on a premise that all the wires 108 are ball bonding wires, and the number of each of the wires 108a and the wires 108b is two or more for each signal line. When one wire 108a and one wire 108b are provided, the wire inductance increases, and thus it is difficult to realize an optical module requiring a speed of 128 GBd or more.

Considering the loop shape of the wire 108, it is best to lay the wire 108 upward from the lower side to the higher side at the time of bonding in order to minimize the length of the wire 108. Furthermore, in a driver that realizes operation of 128 GBd or more as illustrated in Non Patent Literature 3, a driver IC manufactured by SiGe BiCMOS is used. In this SiGe BiCMOS driver IC, an Al electrode PAD is generally used, and an Au wire is generally used as the wire. Moreover, the Au electrode PAD is generally used for a modulator chip and an optical communication device. That is, the connection portion of the driver IC chip 101 and the wire 108 is not an Au-Au joint but a different material connection portion of Au-Al. It is necessary to pay attention to the formation of the wire 108 from the viewpoint of suppressing aged deterioration and environment-induced deterioration in the Au-Al different material connection portion and securing long-term reliability. Specifically, it is known to be desirable that the amount of Au is large in order to secure long-term stability for the connection portion of the driver IC chip 101 with the Al electrode PAD. Accordingly, it is desirable to lay the wire 108 on the driver IC chip 101 side having the Al electrode PAD in first bonding in which a ball is formed in the bonding, and then perform the bonding on the modulator chip 102 or the RF terrace 109 side as second bonding.

From the viewpoint of mounting by such a procedure, it is desirable that the driver IC chip 101 is mounted so as to be lower than the modulator chip 102 and the RF terrace 109. Moreover, the thickness of the ball in the first bonding of the wire 108 is approximately 50 µm, and it is desirable that the height difference between the driver IC chip 101 and the modulator chip 102 and the height difference between the driver IC chip 101 and the RF terrace 109 are both approximately 50 to 100 µm, in consideration of the shape adjustment of the wire 108 and the like.

However, the present invention is not limited to the above bonding procedure, and for connection using the wire 108 between the driver IC chip 101 and the modulator chip 102 and between the driver IC chip 101 and the RF terrace 109, the second bonding may be performed on the driver IC chip 101 side, and the first bonding may be performed on the modulator chip 102 and the RF terrace 109 side in advance. In a case where bonding is performed in such a procedure, it is desirable that the driver IC chip 101 side has a ball-on-wire shape. That is, a ball is formed in advance on the driver IC chip 101 side, and then the wire 108 is laid on the ball formed on the driver IC chip 101 in second bonding. As a result, even if the second bonding is performed on the driver IC chip 101 side, the reliability of the connection portion can be secured. Moreover, in the case of bonding in such a procedure, since a ball is formed on each of the driver IC chip 101, the modulator chip 102, and the RF terrace from the viewpoint of minimizing the length of the wire 108, it is unnecessary to consider the height of the ball, and it is desirable that the heights of the members are substantially equal.

### (Formation of metal pillar)

As described above, from the viewpoint of suppressing the oscillation of the high-frequency characteristic due to the instability of the driver IC chip 101, it is extremely important to manage the distance in the vertical direction from the surface of the driver IC chip 101 fixed to the package 105 by seam welding to the surface of the lid 110. In order to operate the driver IC chip 101 at a high speed, it may be difficult to realize absolute stability (k-factor > 1) in both the differential characteristic and the in-phase characteristic in any load state in the entire frequency band. In such a case, there is a possibility that oscillation occurs in the high-frequency characteristic due to instability of the ground caused by inductance or the like by the wire 108 at the time of mounting, for example. In order to avoid the instability of the ground and secure the stability of the driver IC chip 101, the inductance is reduced by grounding the driver IC chip 101 with as many wires as possible, and the length of the ground wire from the driver IC chip 101 is minimized.

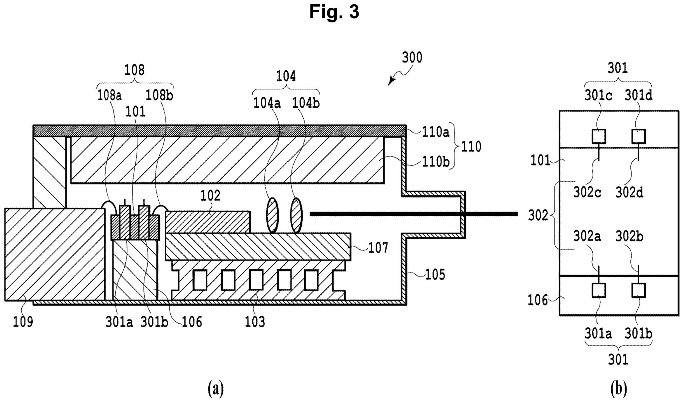

Fig. 3 is a diagram schematically illustrating a configuration of an optical module 300 according to the present disclosure. The optical module 300 according to the present embodiment includes, in addition to the configuration of the optical module 100 described above, a metal pillar 301 disposed on the metal block 106 and adjacent to the driver IC chip 101, and a ground wire 302 that connects the metal pillar 301 with the driver IC chip 101. Note that, although each of the metal pillar 301 and the ground wire 302 is depicted as four bodies in Fig. 2, this is intended to be an illustration, and any number of the metal pillars 301 and the ground wires 302 may be disposed according to the design. Moreover, for the metal pillar 301, Au-plated CuW or the like can be used, for example, in order to secure connectivity with an Au wire. Regarding the present portion, since it is unnecessary to take into consideration the heat dissipation property and the consistency of the material constant, there is no problem even if another metal is used as a base.

As described above, in order to suppress the oscillation in the high-frequency characteristic (stabilize the ground potential of the driver IC chip 101), it is desirable to shorten the length of the ground wire 302 from the driver IC chip 101. From the viewpoint of minimizing the length of the ground wire 302, it is desirable to install the metal pillar 301 higher than the height of the driver IC chip 101 on the metal block 106. This is because, on the premise of using a ball bonding wire, the length of the wire increases by the thickness of the ball when the wire is laid downward (or when the driver and the metal block have equal heights). For the above reason, it is desirable that the first bonding is performed on the driver IC chip 101 side. However, similarly to the RF connection portion described above, the second bonding may be used as the driver IC chip 101. In such a case, a bonding procedure is desirable in which a ball is formed on the driver IC chip 101 in advance and the ground wire 302 is laid on the ball by second bonding. Note that, in a case where such second bonding is performed on the driver IC chip 101 side, it is desirable that the surface of the PAD disposed on the upper surface of the driver IC chip 101, and the upper surface of the metal pillar 301 have substantially equal heights.

As another method for suppressing the oscillation in the high-frequency characteristic, for example, it is also conceivable to provide the ground PAD on the RF terrace 109 disposed adjacent to the driver IC chip 101. However, in the above-described configuration, the driver IC chip 101 and the metal pillar 301 can be disposed extremely close to each other with a distance of 100 µm or less. On the other hand, in the configuration to be described later, it is necessary to bring the RF terrace 109 closer to the driver IC chip 101, and for this purpose, the driver IC chip 101 is put into the package 105 later. Therefore, in consideration of tolerance and workability at the time of mounting, there is a disadvantage that it is difficult to shorten the distance as compared with the form of forming the metal pillar 301. Accordingly, a form in which the metal pillar 301 is formed is desirable from the viewpoint of minimizing the length of the ground wire 302.

### (Formation of radio wave absorber)

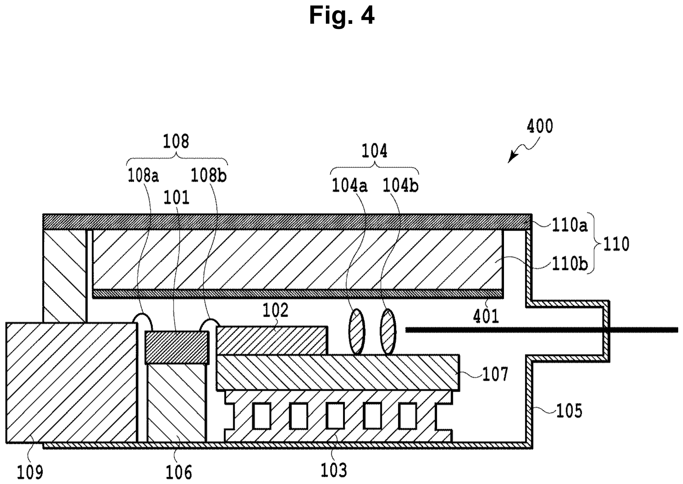

Fig. 4 is a side cross-sectional view schematically illustrating a structure of an optical module 400 according to the present disclosure. As illustrated in Fig. 4, the optical module 400 further includes a radio wave absorber 401 formed on the lid 110 in addition to the configuration of the optical module 100. Note that, although Fig. 4 depicts a form in which the radio wave absorber 401 is formed on the thick plate portion 110b of the lid 110, this is intended to be an illustration, and is not limited to the form illustrated in Fig. 4. As described above, the thick plate portion 110b may include a plurality of layers, and an additional metal block for adjusting the thickness may be further disposed. In such a configuration, the radio wave absorber 401 is formed on the additional metal block.

From the viewpoint of more efficiently suppressing the oscillation in the high-frequency characteristic, it is effective to absorb a radio wave in a frequency band at which there is a risk of oscillation in a case where a frequency at which the oscillation is likely to occur is specified. The radio wave absorber 401 is configured to absorb a radio wave in a frequency band at a risk of such oscillation. In addition, the radio wave absorber 401 may be configured to absorb light having the same wavelength as the signal light. The signal light herein may be in, for example, a 1.55 µm band or a 1.3 µm band which is often used for signal light for optical communication. The radio wave absorber 401 configured as described above can also absorb stray light generated in the modulator chip 102 or the optical mounting member 104. Accordingly, it is possible to prevent the stray light from being reflected on the surface of the lid 110 and deteriorating the optical characteristic of the optical module due to interference with the signal light. From the same viewpoint, it is also desirable that the ceramic member of the package 105 is configured to be able to absorb signal light.

### (Verification test)

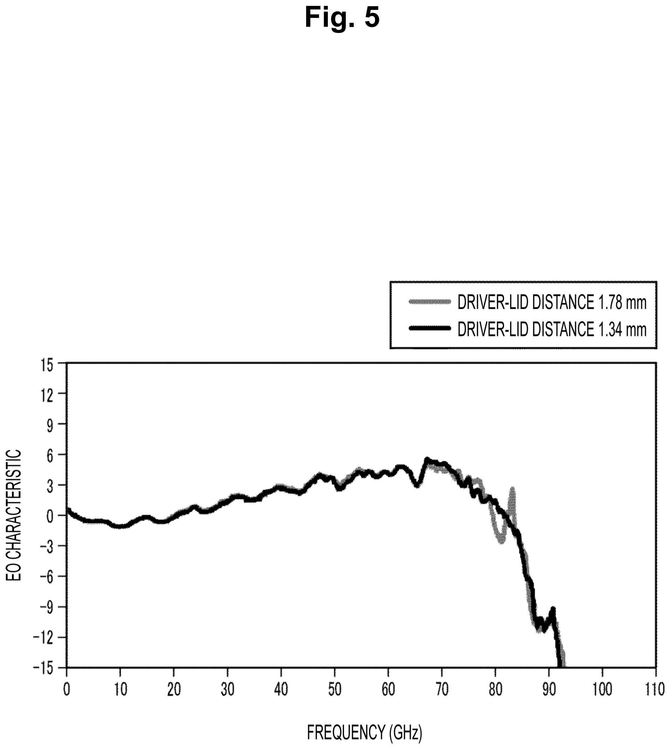

Fig. 5 illustrates a result of confirming the effect of suppressing oscillation by experimentally producing an HB-CDM capable of 160 GBd class operation on which the driver IC chip 101 and the modulator chip 102 are mounted actually, changing the thickness of the lid 110 to adjust the distance in the vertical direction from the surface of the driver IC chip 101 to the surface of the lid 110, and setting the distance to less than 1/2 times the wavelength at the maximum frequency. In the experimentally produced HB-CDM, the driver IC chip 101 mounted inside has a k-factor indicating the stability of the driver, the k-factor being a value smaller than 1 at 80 to 90 GHz, from the high-frequency measurement data of the driver IC chip 101 alone. That is, it is known that the driver IC chip 101 is not absolutely stable, and the risk of oscillation is extremely high at a frequency of 80 to 90 GHz at which k-factor < 1 is satisfied in a case where the driver IC chip 101 becomes unstable due to a mounting state or the like.

As illustrated in Fig. 5, in a case where the distance in the vertical direction from the surface of the driver IC chip 101 to the lid 110 is 1.78 mm, it can be confirmed that oscillation occurs at a frequency of 84 GHz. When 84 GHz is converted into a wavelength, the obtained wavelength is approximately 3.57 mm with the relative permittivity of 1, and 1/2 times this wavelength is approximately 1.785 mm. Therefore, it can be seen that the distance in the vertical direction from the surface of the driver IC chip 101 to the lid 110 is a value equivalent to 1.78 mm, and coincides well with the cavity resonance frequency between the surface of the driver IC chip 101 and the surface of the lid 110. Since the experimentally produced HB-CDM is aimed at 160 GBd-class operation, it is necessary to bring the cavity resonance frequency after 160 GHz×0.7 = 112 GHz. In a case where the relative permittivity is 1, 112 GHz of approximately 2.68 mm is obtained by conversion into a wavelength. Accordingly, a wavelength of 1/2 times the wavelength is approximately 1.34 mm, and it is necessary to further shorten the distance in the vertical direction from the surface of the driver IC chip 101 to the surface of the lid 110. As illustrated in the figure, it was confirmed that the oscillation was clearly suppressed in a case where the distance in the vertical direction from the surface of the driver IC chip 101 to the lid 110 was 1.34 mm.

Although this verification was performed by changing the thickness of the lid 110 since the shape of the package 105 was fixed, the thickness of the lid 110 may be actually fixed and the distance between the driver IC chip and the lid 110 may be adjusted by adjusting the thickness of the package 105. However, in a case where the shape of the package 105 is determined to be a certain constant shape, it is effective to adjust the distance between the driver IC chip and the lid 110 by the thickness of the lid 110 as described above. For example, on the package 105 side, since it is necessary to complicatedly route the RF wiring, the DC wiring, and the like, the required number of layers and thickness are determined to some extent, and adjustment to a desired thickness is often impossible. Moreover, since the lid 110 is less expensive and has higher availability than the package 105, it can be said that it is easier to adjust the distance between the driver IC chip 101 and the lid 110 by the lid 110.

In the above description, an optical modulator module represented by an HB-CDM in which the InP modulator chip and the driver IC chip are mounted in the same package has been described. However, the modulator chip is not necessarily an InP modulator chip, and may be a Si modulator or an LN modulator. Moreover, as described above, the present effect can be obtained even when the optical module is an optical receiver module such as an HB-ICR in which a TIA and a receiver chip are mounted in the same package, or an optical module such as IC-TROSA or COSA in which a modulator chip and a driver, a receiver chip, a TIA, and transmission and reception are mounted. In addition, since the present invention does not depend on the number of channels of the optical module, the optical implementation form, or the package form, these may have any form. In the case of the configuration that does not use the InP modulator, the Peltier element 103 and hermetic sealing described above are not necessarily required.

### Industrial Applicability

As described above, the optical module and the method for manufacturing the same according to the present disclosure can provide a stable broadband optical module without oscillation of a high-frequency characteristic within a necessary frequency band. Such an optical module is expected to be applied to a high-speed optical communication system as a digital coherent system.

### Reference Signs List

- 100: Optical module
- 101: Driver IC chip
- 102: Modulator chip
- 103: Peltier element
- 104: Optical mounting member
- 104a, 104b: Optical mounting member
- 105: Package
- 106: Metal block
- 107: Substrate
- 108: Wire
- 108a, 108b: Wire
- 109: RF Terrace
- 110: Lid
- 110a: Thin plate portion
- 110b: Thick plate portion
- 200: Optical module
- 300: Optical module
- 301: Metal pillar
- 302: Ground wire
- 400: Optical module
- 401: Radio wave absorber

## Claims

1. An optical module comprising:
one of a driver IC chip and a modulator chip, or a TIA chip and a receiver chip, integrated in a same package having an RF terrace connected with an RF interface;
a plurality of wires that connect the driver IC chip with the modulator chip, or the TIA chip with the receiver chip, and the driver IC chip with the RF terrace, or the TIA chip with the RF terrace, and are installed for each connection portion; and
a lid serving as a cap portion disposed at a position facing the driver IC chip and the modulator chip, or the TIA chip and the receiver chip,
wherein a distance in a vertical direction from a surface of the driver IC chip or a surface of the TIA chip to a surface of the lid is less than 1/2 times a wavelength corresponding to an atmosphere in the package at a frequency of 0.7 times an operation baud rate.

2. The optical module according to claim 1, wherein the lid is configured such that a distance in a vertical direction from a surface of the driver IC chip or a surface of the TIA chip to a surface of the lid is less than 1/2 times a wavelength corresponding to an atmosphere in the package at a frequency of 0.7 times an operation baud rate only in a portion corresponding to the driver IC chip or the TIA chip.

3. The optical module according to claim 1,
wherein a height of the driver IC chip is equal to or lower than heights of the modulator chip and the RF terrace, or a height of the TIA chip is equal to or lower than heights of the receiver chip and the RF terrace.

4. The optical module according to claim 1,
wherein an electrode PAD of the driver IC chip or the TIA chip is Al,
the modulator chip or the receiver chip, and the electrode PAD of the RF terrace are Au,
the wire is an Au ball bonding wire,
a distance between the driver IC chip and the modulator chip, or a distance between the TIA chip and the receiver chip is 100 µm or less,
a height difference between the electrode PAD surface of the driver IC chip and the electrode PAD surface of the modulator chip, or a height difference between the electrode PAD surface of the TIA chip and the electrode PAD surface of the receiver chip is 100 µm or less, and
a distance and a height difference between the PAD surface of the RF terrace and the electrode PAD surface of the driver IC chip, or a distance and a height difference between the PAD surface of the RF terrace and the electrode PAD surface of the TIA chip are both within 200 um.

5. The optical module according to claim 1, further comprising:
a metal block disposed between the driver IC chip or the TIA chip and the package;
a metal pillar disposed on the metal block so as to be electrically connected with the metal block; and
a ground wire that connects the metal pillar with the driver IC chip or the TIA chip,
wherein a height of the driver IC chip or the TIA chip is equal to or lower than a height of the metal pillar.

6. The optical module according to claim 1, further comprising a radio wave absorber that is formed on the lid and is configured to absorb light having a same wavelength as a radio wave and signal light in a frequency band at which there is a predicted risk of oscillation.

7. A method for manufacturing the optical module according to claim 2 in which a height of the driver IC chip is lower than heights of the modulator chip and the RF terrace, or a height of the TIA chip is lower than heights of the receiver chip and the RF terrace,
the method comprising bonding the wire,
wherein the bonding the wire includes
performing first bonding to an upper surface of the driver IC chip or the TIA chip, and
performing second bonding to an upper surface of each of the modulator chip or the receiver chip, and the RF terrace.

8. A method for manufacturing the optical module according to claim 2 in which a height of the driver IC chip is equal to heights of the modulator chip and the RF terrace, or a height of the TIA chip is equal to heights of the receiver chip and the RF terrace,
the method comprising bonding the wire,
wherein the bonding the wire includes
performing first bonding to an upper surface of each of the modulator chip or the receiver chip, and the RF terrace, and
subsequently performing second bonding on a ball previously formed on an upper surface of the driver IC chip or the TIA chip.
